# EUROPÄISCHE PATENTSCHRIFT

(11) **EP 1 652 592 B1**
(45) Veröffentlichungstag und Bekanntmachung des Hinweises auf die Patenterteilung: **12.08.2015**
(21) Anmeldenummer: 05090290.7
(22) Anmeldetag: 17.10.2005
(51) Int. Cl.: B09B 1/00, C04B 18/04, C04B 28/18, E02D 31/00

(54) **Verfahren zur Herstellung einer Deponieabdeckung**
Method for landfill encapsulation
Procédé de recouvrement de décharge

(30) Priorität: 28.10.2004 DE 102004053110; 28.10.2004 DE 202004016937 U
(43) Veröffentlichungstag der Anmeldung: 03.05.2006
(73) Patentinhaber: Fehrmann, Arnim, 15366 Münchehofe (DE)
(72) Erfinder: Fehrmann, Arnim, 15366 Münchehofe (DE); Fehrmann, Ronny, 15366 Münchenhofe (DE)
(74) Vertreter: Kietzmann, Manfred

(56) Entgegenhaltungen:
- DE-A1- 3 727 819
- DE-A1- 3 732 961
- DE-A1- 4 429 346
- DE-A1- 19 540 387

## Beschreibung

Die Erfindung betrifft ein Verfahren zur Herstellung einer Deponieabdeckung unter Verwendung von Schlickstoffen aus natürlichen und/oder künstlichen Gewässern, die einer Aufbereitung unterzogen wurden, hergestellt wird. Das Deponieabdeckmaterial soll mechanisch verdichtbar sein.

Aus der DE 37 27 819 A1 der am nächtsliegen Stand der Technick gemäß Anspruch 1 angesehen wird, ist ein Verfahren zum Abdichten von Bodenformationen, insbesondere zur Basisabdichtung von Deponien bekannt, bei dem Gewässerschlamm mit 30-70% mit 30-70 Gewichtsprozent bezogen auf das Schlammtrockengewicht mit wasseraufnahmefähigen Zuschlagstoffen vermischt auf die Bodenformation aufgebracht und mechanisch verdichtet wird.

Aus der DE 37 32 961 A1 ist die Verwendung der bei der Entnahme von Sedimenten aus natürlichen und/oder künstlichen Gewässern in einem Aufbereitungsverfahren gewonnenen Feinfraktion einer mineralichen Körnung, insbesondere mit Bestandteilen im Größenbereich bis zu 0,063 mm, als Deponiebasis und/oder Deponieoberflächen-Dichtungsmaterial mit einem mittleren Wasserundurchlässigkeitskoeffizienten von mindestens k_{f}= 1 x 10⁻¹⁰ m/s bekannt. Die Feinfraktion wird durch Zugabe eines aus Natriumsilikat bestehenden Konditionierungsmittels und eines bodenmechanisch wirkenden Stabilisierungsmittels aufbereitet.

Dabei gewährleistet das Konditionierungsmittel durch seine Einlagerung in die feinen Zwischenräume der Feinfraktion mineralischer Körnung das hohe Abdichtvermögen und das Stabilisierungsmittel bewirkt die mechanischen Eigenschaften hinsichtlich Tragfestigkeit und Dauerbeständigkeit, wobei zusätzlich der Abdichtungseffekt kombinativ begünstigt wird. Das Konditionierungsmittel ist vorzugsweise trockenes, mehlfein pulverförmiges oder flüssiges Natron-Wasserglas, welches der Feinfraktion in einer Menge zwischen 3 und 7 Gew.%, insbesondere 5 Gew.%, zugemischt ist und durch chemische Reaktion im Verwendungsfall unlösliche Gele bildet.

Die erprobten wasserglasvergüteten Dichtungssysteme aus Abfallstoffen und Recyclingmaterialien erfordern nach der DE 44 29 346 C2 den Einsatz von kostenaufwendigen Gelbbildnern zur Verringerung der Wasserdurchlässigkeit. Das ist neben dem Entstehen unlöslicher Gele ein weiterer Nachteil.

Auch die im weiteren bekannt gewordene DE 195 40 387 A1 setzt zur Gewährleistung der zulässigen Wasserdurchlässigkeitsbeiwerte neben multimineralischen Dichtungsschichten künstliche Dichtungsschichten ein, hier in Form von einer Kunststoffdichtungsbahn und einem Schutzvlies. Zusätze zu den mineralischen Dichtungsschichten, wie hier Bentonit zum Binden von Gießereialtsanden haben in erster Linie eine stabilisierende Aufgabe für die mineralischen Stoffe.

In der EP 0 500 199 B1 wird ein Verfahren zum Aufarbeiten von kontaminierten Gewässersedimenten zu einem dauerhaft umweltverträglichen, auf Haldendeponie deponierbaren Material bzw. einem umweltverträglichen Baumaterial, insbesondere Dichtungsschichten beschrieben. Die Abdichtung wird dadurch erzielt, dass der Zuschlagstoff Tonmehl eine überwiegende Korngröße von kleiner 0,002 mm aufweist, um so die Poren des Gemisches weitgehend abdichten zu können. Dem Gemisch können zusätzlich Kalkhydrat und ggf. noch weitere hydraulische Bindemittel zugesetzt werden, um so ein umweltverträgliches Baumaterial mit einer ausreichenden Festigkeit zu erhalten.

Aufgabe der Erfindung ist es, ein verdichtungsfähiges abdichtendes und tragendes Deponieabdeckmaterial, das unter Verwendung von aufbereiteten Schlickstoffen herstellbar ist, vorzuschlagen, wobei die Herstellung kostengünstig erfolgt und beim Einsatz keine umweltbelasteten Substanzen aktiviert oder zusätzlich eingebracht werden.

Gelöst wird diese Aufgabe mit den Merkmalen der Ansprüche 1, vorteilhafte Ausgestaltungen sind Gegenstand der Unteransprüche.

Erfindungsgemäß ist ein Verfahren zur Herstellung einer Deponieabdeckung unter Verwendung von aus natürlichen und/oder künstlichen Gewässern entnommenen und aufbereiteten Schlickstoffen mit einer Korngröße kleiner 0,02 mm und einem Trockensubstanzanteil zwischen 30 und 60 % vorgesehen. Dem sind Beimengungen von Tonmineralien, insbesondere Bentonit und/oder kaolitischer Tonerde, und/oder Kalk, insbesondere Brandkalk, und Flugasche oder Flugasche allein beigemischt.

Die Beimengungen erfolgen in einer Größenordnung, bei der eine Annäherung an den optimalen Wassergehalt, vorzugsweise um die 30 %, erfolgt. Nach bisherigen Untersuchungen reichen dafür Anteile von Tonmineralien und/oder Kalk und Flugasche oder Flugasche allein jeweils maximal bis 15 Gew % aus.

Die so erreichte Struktur des Deponieabdeckmaterials gestattet das Arbeiten mit einer aufgetragenen, verdichteten Schichtdicke des Deponieabdeckmaterials auf die Deponie unter 600 mm und über 300 mm. Dabei wird das Deponieabdeckmaterial als Schicht zwischen Vliesen, einer oberhalb befindlichen Entwässerungsschicht und einer Rekultivierungsschicht angeordnet.

Das Beimischen der Beimengungen erfolgt vorzugsweise vor Ort mittels eines Zwangsmischers vor dem Ausbringen des Deponieabdeckmaterials oder nach dem Ausbringen der aufbereiteten Schlickstoffe auf die Deponie durch Eingrubbern und/oder Einfräsen.

### Ausführungsbeispiel:

Die natürlichen und/oder künstlichen Gewässern entnommenen Schlickstoffe werden in verschiedenen Verfahrensstufen behandelt wie Vorabsiebung und Cattern, Grobkornabscheidung, Hydroklassierung, Eindickung und Entwässerung (vgl. die Behandlung gebaggerter Elbesedimente im Hamburger Hafen, Hochschule für Technik und Wirtschaft Dresden, Berichte und Informationen aus Forschung, Lehre und Praxis, 3/94 S. 186 bis 191), so dass ein weiter verarbeitbares Material mit einer Korngröße kleiner 0,02 mm und einem Trockensubstanzanteil von 45 % vorliegt.

Dieses Material wird im Deponiebereich einem Zwangsmischer zugeleitet und mit Flugasche vermischt. Die Menge an Flugasche beträgt 12 Gew. %. Das so hergestellte Deponieabdeckmaterial wird auf die Deponie aufgebracht und auf eine Schichtdicke von 500 mm mechanisch verdichtet. Nach dem Aufbringen eines Vlieses und einer Entwässerungsschicht erfolgt der Auftrag einer Rekultivierungsschicht.

## Patentansprüche

1. Verfahren zur Herstellung einer Deponieabdeckung bei dem aus natürlichen und/oder künstlichen Gewässern entnommene und aufbereitete Schlickstoffe mit einer Korngröße kleiner 0,02 mm und einem Trockensubstanzanteil zwischen 30 und 60 % unter Zusatz von Beimengungen von Tonmineralien und/oder Kalk und Flugasche oder Flugasche allein als Schicht auf die Deponie aufgebracht und auf eine Schichtdicke von 300 mm-600 mm verdichtet werden.

2. Verfahren zur Herstellung einer Deponieabdeckung nach Anspruch 1, **dadurch gekennzeichnet, dass**
das Deponieabdeckmaterial einen optimalen Wassergehalt von ca. 30 % aufweist.

3. Verfahren zur Herstellung einer Deponieabdeckung nach Anspruch 1 oder 2, **dadurch gekennzeichnet, dass**
die Anteile Tonmineralien, insbesondere Bentonit und/oder kaolitischer Tonerde; und/oder Kalk, insbesondere Brandkalk, und Flugasche oder Flugasche allein jeweils maximal bis 15 Gew. % betragen.

4. Verfahren zur Herstellung einer Deponieabdeckung nach einem der Ansprüche 1 bis 3, **dadurch gekennzeichnet, dass**
die Beimengungen nach dem Ausbringen der aufbereiteten Schlickstoffe auf die Deponie durch Eingrubbern und/oder Einfräsen eingebracht werden.

## Claims

1. A method for the production of a landfill cover wherein treated sludge extracted from natural and/or artificial bodies of water having a grain size of less than 0.02 mm and a dry substance content of between 30 and 60% and admixtures of clay minerals and/or lime and fly ash or just fly ash are applied as a layer to the landfill and compressed to a layer thickness of 300-600 mm.

2. The method for the production of a landfill cover according to Claim 1, **characterized in that**
the landfill covering material has an optimum water content of approx. 30%.

3. The method for the production of a landfill cover according to Claim 1 or 2, **characterized in that**
the proportions of clay minerals, in particular bentonite and/or kaolitic alumina, and/or lime, in particular quicklime, and fly ash or just fly ash amount, in each case, to a maximum of up to 15% by weight.

4. The method for the production of a landfill cover according to any one of Claims 1 to 3, **characterized in that**
the admixtures are introduced following the application of the treated sludge onto the landfill by means of cultivation and/or tilling.

## Revendications

1. Procédé de production d'une couverture de décharge dans lequel des matières limoneuses prélevées à partir d'eaux naturelles et/ou artificielles et traitées, et présentant une taille de grains inférieure à 0,02 mm et une proportion de matières sèches entre 30 et 60 %, sont, avec l'apport d'additions de minéraux argileux et/ou de chaux et de cendres volantes ou de cendres volantes seules, appliquées en tant que couche sur la décharge et compactées jusqu'à une épaisseur de couche de 300 mm - 600 mm.

2. Procédé de production d'une couverture de décharge selon la revendication 1, **caractérisé en ce que**
le matériau de couverture de décharge présente une teneur en eau optimale d'environ 30 %.

3. Procédé de production d'une couverture de décharge selon la revendication 1 ou 2, **caractérisé en ce que**
les proportions de minéraux argileux, en particulier de bentonite et/ou d'argile kaolinitique ; et/ou de chaux, en particulier de chaux vive, et de cendres volantes ou de cendres volantes seules sont respectivement égales à 15 %-poids maximum.

4. Procédé de production d'une couverture de décharge selon une des revendications 1 à 3, **caractérisé en ce que**
les additions sont, après l'épandage des matières limoneuses traitées sur la décharge, mises en place sur la décharge par enfouissement et/ou creusement.
